# FASCICULE DE BREVET EUROPEEN

(11) **EP 0 877 915 B1**
(45) Date de publication et mention de la délivrance du brevet: **24.04.2002**
(21) Numéro de dépôt: 97901134.3
(22) Date de dépôt: 21.01.1997
(51) Int. Cl.: G01C 23/00, G05D 1/06

(54) **PROCEDE ET DISPOSITIF D'AIDE A LA NAVIGATION AERIENNE**
VORRICHTUNG UND VERFAHREN FÜR FLUGZEUGNAVIGATIONSHILFE
AIR NAVIGATION ASSISTANCE DEVICE AND METHOD

(30) Priorité: 02.02.1996 FR 9601292
(43) Date de publication de la demande: 18.11.1998
(73) Titulaire: THALES AVIONICS S.A., 78141 Vélizy Villacoublay Cédex (FR)
(72) Inventeur: BOMANS, Muriel Thomson-CSF S.C.P.I., F-94117 Arcueil Cédex (FR); GRAND-PERRET, Sylvie Thomson-CSF S.C.P.I., F-94117 Arcueil Cédex (FR)
(74) Mandataire: Guérin, Michel
(86) Numéro de dépôt international: FR9700116
(87) Numéro de publication internationale: WO9728423

(56) Documents cités:
- FR-A- 2 689 231
- THEUNISSEN E: "FACTORS INFLUENCING THE DESIGN OF PERSPECTIVE FLIGHT PATH DISPLAYS FOR GUIDANCE AND NAVIGATION" 1 Janvier 1994 , DISPLAYS, VOL. 15, NR. 4, PAGE(S) 241 - 254 XP000510885 voir page 246, colonne 2; figure 11

## Description

L'invention concerne les procédés et les dispositifs d'assistance à la navigation aérienne.

D'une façon générale, on sait que dans les aérodynes (avions, hélicoptères, etc.) de conception moderne, le pilote doit dialoguer avec un système de gestion de vol (en anglais "Flight Management System") qui est un calculateur embarqué dans l'aérodyne (dans la suite on parlera d'avion) pour assister le pilote dans un certain nombre d'opérations. Ces opérations sont principalement des opérations de définition de plan de vol avant le décollage, des opérations de pilotage (manuel ou automatique) pendant le décollage et l'atterrissage, des opérations de navigation aérienne (calculs de trajectoires, etc.), des opérations de contrôle systématique, en croisière ou au moment de l'approche d'un aéroport.

Le système de gestion de vol fonctionne à partir de données introduites par le pilote, de données fournies par des capteurs répartis dans l'avion, et éventuellement de données numériques transmises par voie hertzienne depuis le sol ou depuis d'autres avions ou même des satellites.

Le dialogue entre l'équipe de pilotage et le système de gestion de vol se fait principalement par le moyen d'au moins trois interfaces qui sont :
- un écran de navigation ("Navigation Display") sur lequel est représenté le tracé de la route désirée pour l'avion, c'est-à-dire une représentation graphique du plan de vol de l'avion et la situation de l'avion sur ce plan (en deux dimensions);
- un écran primaire de pilotage ("Primary Flight Display") qui affiche d'une part un horizon artificiel qui s'incline lorsque l'avion s'incline, et d'autre part une indication d'assiette longitudinale de l'avion et d'autres indications utiles au pilotage;
- une boîte de commande de vol ("Flight Control Unit") ayant des commandes manuelles pour sélectionner des consignes telles que le cap désiré pour l'avion;
- et enfin une console clavier-écran, appelée MCDU ("Multipurpose Control Display Unit") qui est une console d'affichage et d'entrées de données permettant à l'équipe de pilotage d'introduire des données dans le système de gestion de vol et de lire des informations communiquées par le système de gestion de vol en fonction des données introduites.

Une des tâches du pilote consiste à élaborer, vérifier, et éventuellement modifier le plan de vol de l'avion, c'est-à-dire les éléments essentiels de la route qu'il doit suivre, notamment les passages au dessus de points caractéristiques appelés "waypoints".

Le plan de vol comporte deux composantes : plan de vol latéral qui définit les waypoints par leurs longitudes et latitudes, et plan de vol vertical qui définit les altitudes de croisière et les vitesses de montées et descentes lors de changements d'altitude. Ces éléments de plan de vol vertical sont définis par rapport aux waypoints.

On a proposé dans la demande de brevet français 92 03 643 déposée le 26 mars 1992 un procédé d'assistance au pilotage dans lequel on affiche sur un écran de visualisation le plan de vol vertical séparément du plan de vol latéral, c'est-à-dire qu'au lieu d'afficher les éléments de plan de vol vertical sous forme d'indications symboliques ou textuelles sur le plan de vol latéral, on affiche séparément un plan de vol vertical sous forme d'un tracé dans un repère à deux axes qui sont les distances en abscisse (avec indications des waypoints) et les altitudes en ordonnée.

Dans un tel procédé, le tracé peut comporter aussi un symbole représentant l'avion, qui se déplace par rapport aux graduations de l'abscisse et de l'ordonnée au fur et à mesure que l'avion avance, et de manière avantageuse, on peut même faire en sorte que le symbole de l'avion reste fixe en abscisse et que l'échelle des abscisses défile au fur et à mesure de l'avance de l'avion; ainsi, c'est principalement la partie de trajet restant à effectuer qui apparaît sur l'écran, et éventuellement aussi une partie de la trajectoire passée. Le symbole de l'avion peut aussi rester fixe en ordonnée et l'échelle des altitudes défilerait alors au fur et à mesure de la montée ou de la descente de l'avion.

L'affichage du plan de vol vertical peut être réalisé sur l'écran de navigation et peut occuper soit tout l'écran (le pilote choisit alors d'afficher soit le plan de vol vertical soit le plan de vol latéral) soit une partie de l'écran, l'autre partie étant affectée au plan de vol latéral; le pilote peut alors voir à la fois le plan de vol latéral et le plan de vol vertical.

On s'est aperçu qu'il pouvait être avantageux pour le pilote de disposer du plan de vol vertical sous une forme différente.

Selon l'invention, on propose un procédé d'aide à la navigation aérienne, utilisant un système de gestion de vol (FMS) qui dialogue avec le pilote par le moyen de plusieurs interfaces parmi lesquelles au moins un écran d'affichage, caractérisé en ce que le système de gestion de vol affiche sur l'écran un axe d'abscisse gradué en temps, un axe d'ordonnée gradué en altitude, et, dans ce repère d'axes, un tracé représentant une trajectoire théorique d'aéronef, et en ce que le système de gestion de vol fait défiler l'axe des temps de manière à maintenir à une position fixe sur l'écran une abscisse représentant le temps à l'instant de l'affichage.

Cette abscisse est de préférence celle de l'origine des axes, c'est-à-dire celle de l'intersection des axes d'abscisse et d'ordonnée. De préférence, l'échelle des altitudes reste fixe, pour une portion de trajectoire donnée, mais on peut aussi prévoir que le système fait défiler l'axe des altitudes de manière à maintenir à une position fixe sur l'écran une ordonnée représentant l'altitude réelle de l'aéronef à l'instant considéré. Cette ordonnée de position fixe est également de préférence celle de l'intersection des axes.

Par conséquent, dans le procédé selon l'invention, on affiche le plan de vol vertical non pas en fonction des distances par rapport aux waypoints, mais en fonction du temps réel. Les positions des waypoints peuvent être indiquées sur le tracé de la trajectoire ou sur l'axe des abscisses, à des abscisses correspondant aux instants estimés de passage par ces waypoints.

L'invention propose également un dispositif d'aide à la navigation aérienne utilisant un système de gestion de vol qui dialogue avec le pilote par le moyen de plusieurs interfaces parmi lesquels au moins un écran d'affichage, caractérisé en ce qu'il comprend des moyens pour afficher sur l'écran un axe d'abscisse gradué en temps, un axe d'ordonnée gradué en altitude, et, dans ce repère d'axes, un tracé représentant une trajectoire théorique d'aéronef, des moyens étant prévus pour faire défiler l'axe des temps de manière à maintenir à une position fixe sur l'écran une abscisse représentant le temps à l'instant de l'affichage. Des moyens peuvent également être prévus pour faire défiler l'axe des altitudes de manière à maintenir fixe sur l'écran une ordonnée représentant l'altitude réelle de l'aéronef à cet instant.

Ce procédé et ce dispositif permettent pour le pilote une meilleure gestion de la prévision du temps, permettant également une meilleure information du contrôle aérien et de la compagnie aérienne avec laquelle le pilote communique, et des possibilités accrues d'information des passagers. L'appréciation par le pilote des prévisions temporelles est globale et immédiate et n'a plus besoin de se faire par des touches de fonction spécifiques (sauf pour obtenir cas par cas des calculs plus précis). Cette meilleure prédiction temporelle est particulièrement appropriée pour la compréhension des risques de collision.

D'autres caractéristiques et avantages de l'invention apparaîtront à la lecture de la description détaillée qui suit et qui est faite en référence aux dessins annexés dans lesquels :
- la figure 1 représente le système de gestion de vol FMS et ses périphériques;
- la figure 2 représente un exemple de plan de vol vertical selon l'art antérieur;
- la figure 3 représente un exemple de plan de vol vertical affiché par le procédé selon l'invention.

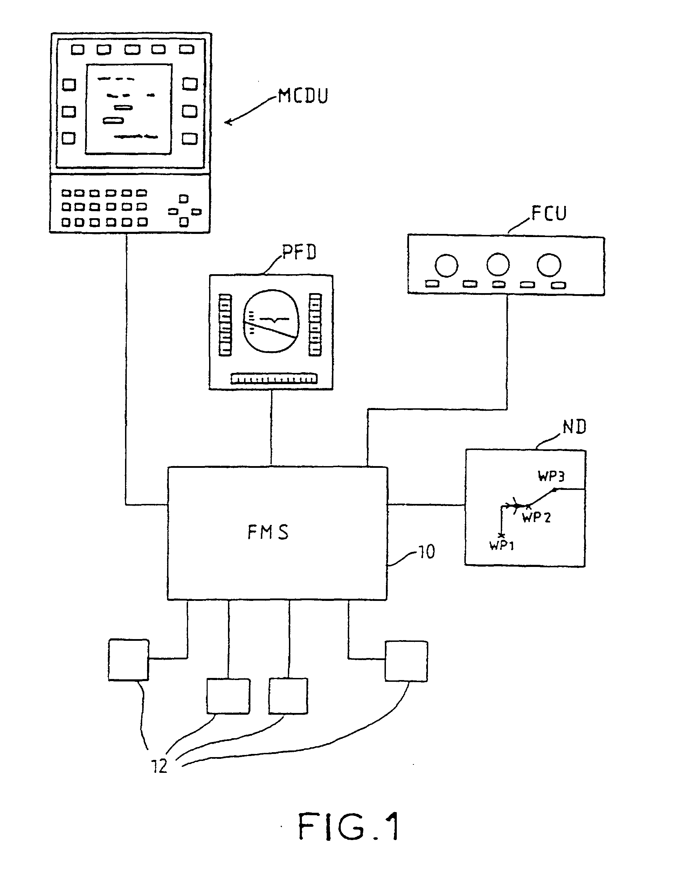

Le dispositif d'aide à la navigation selon l'invention constitue une partie d'un système global de contrôle de l'avion. Ce système global, représenté à la figure 1, comporte essentiellement :
- le système de gestion de vol, ou FMS ("Flight Management System"), qui est un calculateur 10 apte à recevoir des informations diverses, à élaborer d'autres informations, et à les communiquer au pilote par le moyen d'interfaces de dialogue;
- des capteurs 12 répartis dans l'avion, parmi lesquels par exemple des instruments de navigation (centrales inertielles IRS, etc.), des capteurs divers donnant des informations sur l'état de l'avion, éventuellement des instruments de communication avec l'extérieur, tous ces capteurs étant reliés au système de gestion de vol;
- les interfaces de dialogue avec le pilote, reliés au calculateur 10, parmi lesquels on peut trouver principalement :
   - une boîte de commande de vol, dite FCU ("Flight Control Unit") permettant, à l'aide de boutons, de sélectionner par exemple le cap de l'avion, ou d'autres valeurs de consigne qu'il est nécessaire de fournir au système de gestion;
   - un écran d'affichage d'informations de navigation, ND ("Navigation Display"), pour afficher des cartes, plans de vol, etc.,
   - un écran d'affichage d'informations de pilotage, PFD ("Primary Flight Display"), pour afficher un horizon artificiel, des altitudes de l'avion, assiettes, vecteurs vitesse, etc.,
   - une console d'affichage et d'entrées de données, MCDU ("Multipurpose Control Display Unit").

Le plan de vol vertical selon l'invention sera affiché en principe sur l'écran de navigation ND; cet écran fonctionne sous le contrôle direct de logiciels contenus dans le calculateur FMS. Le plan de vol vertical ne sera cependant pas affiché en permanence sur l'écran de navigation, mais il sera affiché en réponse à une activation d'une touche de fonction spécifique de l'écran.

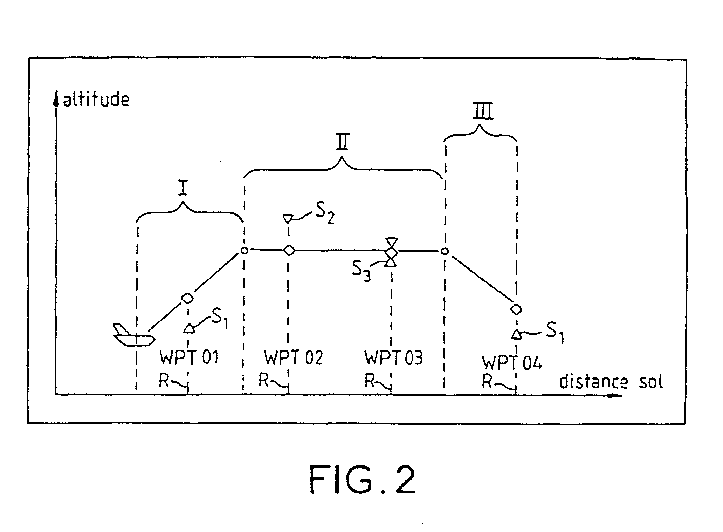

Sur la figure 2, on voit un plan de vol vertical affiché d'une manière proposée dans l'art antérieur (demande de brevet français déjà citée). Le plan de vol comporte un tracé par segments reliant plusieurs points de passage représentés par des losanges. Chaque losange correspond à un waypoint (WPT01 à WPT04) positionné sur l'axe des abscisses qui est un axe gradué en distances. Les projections des waypoints sur l'axe des abscisses sont désignées par la lettre R. La position de l'aéronef à l'instant considéré est représentée par un symbole d'avion en début de trajectoire. Des symboles triangulaires pointe en haut (S1) et pointe en bas (S2) représentent des contraintes d'altitude minimale et maximale respectivement que l'aéronef doit respecter au cours de son trajet. Ces contraintes sont en général associées à des waypoints et sont donc localisées sur l'écran à la même abscisse que le waypoint correspondant. Deux triangles tête-bêche se touchant par la pointe indiquent donc une altitude obligatoire de passage (S3).

Dans l'exemple représenté, la trajectoire se décompose en trois parties, avec diverses contraintes d'altitude :
I : montée en altitude
II : palier de croisière
III : descente

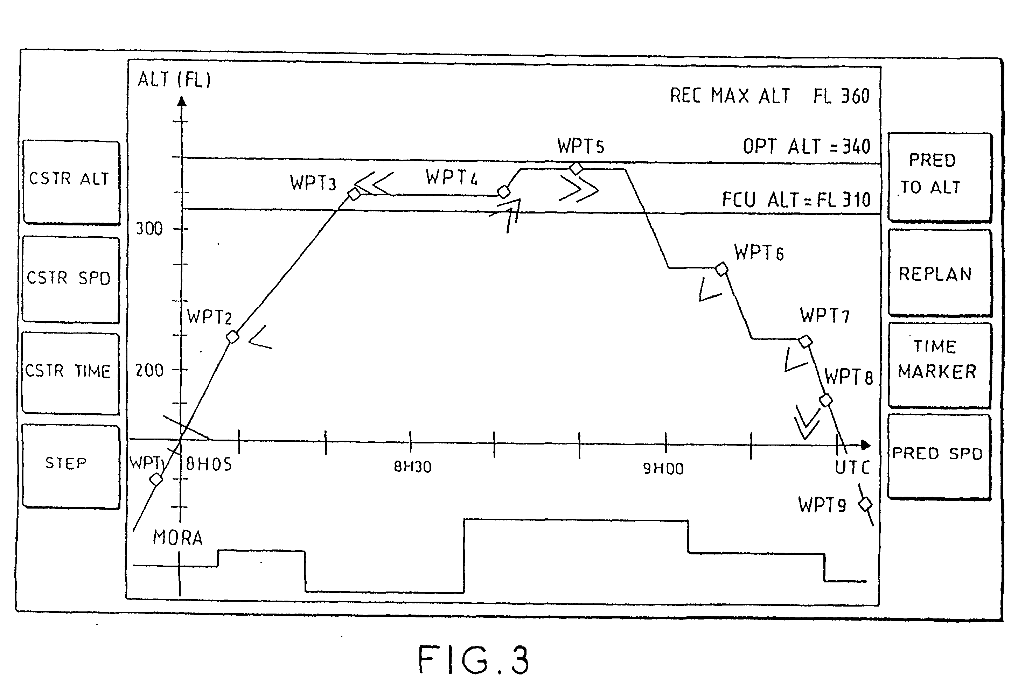

La figure 3 représente un affichage obtenu avec les moyens proposés par la présente l'invention. Cet affichage peut occuper la totalité de l'écran de navigation ND, ou seulement la moitié; l'affichage pourrait être réalisé aussi sur un autre écran que l'écran ND.

L'affichage comporte un axe horizontal des temps et un axe vertical des altitudes. L'axe horizontal, ou axe des abscisses, est gradué en temps universel (UTC), selon une échelle qui défile au cours du temps. Dans l'exemple le plus simple, le défilement est tel que l'origine de l'axe des temps représente à chaque instant l'heure actuelle au moment de l'affichage. Sur le graphique, il est 8h05 à l'heure de l'affichage et l'échelle des temps défile de la droite vers la gauche. A huit heure trente, l'affichage sera tel que la graduation 8H30 se sera déplacée vers la gauche jusqu'à prendre la place de la graduation 8H05 à l'intersection de l'axe des abscisses et de l'axe des ordonnées. On pourrait prévoir que l'abscisse représentant le temps actuel est un point fixe de l'écran autre que l'intersection des axes d'abscisse et d'ordonnée, mais il est plus commode de prévoir que c'est cette intersection.

L'axe vertical, ou axe des ordonnées, est gradué en altitudes. Dans l'exemple représenté, la graduation est définie par unité de 100 pieds (un pied = 30 cm environ), c'est-à-dire que la graduation 300 correspond à une altitude de 30000 pieds. La graduation peut dépendre des phases de vol : jusqu'à une attitude de transition, la graduation est en pieds; puis elle est en niveau de vol ("Flight Level" FL), c'est-à-dire en unités de 100 pieds.

Dans cet exemple de réalisation, l'échelle des altitudes est également défilante : les graduations défilent vers le bas au fur et à mesure que l'avion monte, ou défilent vers le haut au fur et à mesure que l'avion descend, de manière que l'altitude de l'avion à l'instant de l'affichage reste maintenue à un point fixe. Dans l'exemple représenté, ce point fixe est l'intersection des axes.

Si les échelles défilent de telle manière que le point d'intersection des axes représente à la fois le temps actuel et l'altitude actuelle de l'avion, on comprend que ce point représente la position de l'avion dans le repère à l'instant considéré.

Le plan de vol est représenté dans ce repère d'axes sous forme de segments de droite dont les pentes représentent les vitesses de montée et de descente, et dont les paliers horizontaux représentent les altitudes de croisière entre les périodes de montée et/ou de descente. Les waypoints peuvent être indiqués sous forme de losanges sur ces segments. Ils sont référencés WPT1 à WPT9 sur le plan de vol de la figure 3. Le waypoint WPT1 étant situé à gauche de l'axe des ordonnées, cela signifie que ce point a déjà été dépassé à l'heure de l'affichage. Il n'est pas absolument nécessaire de conserver à gauche de l'axe des ordonnées la partie de plan de vol déjà réalisée mais il est commode cependant d'en avoir une petite fraction représentant la partie la plus récemment réalisée.

C'est le système de gestion de vol FMS qui calcule le tracé des segments de droite à afficher, à partir de données de plan de vol théoriques introduites par le pilote et à partir de données réelles fournies par les capteurs de l'avion, afin que le plan de vol vertical affiché corresponde effectivement à ce qui se passe au moment considéré. Bien entendu, on peut prévoir aussi que le système de gestion de vol fournit seulement des informations de plan de vol, et le terminal d'affichage est un terminal intelligent qui sait réaliser les tracés à partir des informations reçues.

On comprend que la position d'un waypoints dans le repère d'axes représente
- en ordonnée l'altitude de passage théorique désirée au dessus du waypoint,
- et en abscisse l'instant prévu pour le passage au dessus de ce waypoint.

Le système de gestion recalcule donc en permanence les points à afficher, en fonction de la trajectoire réellement suivie par l'avion.

Un symbole d'avion est placé au point représentant le temps actuel et l'altitude actuelle. Ce symbole est donc placé dans cet exemple à l'intersection de l'axe des temps et de l'axe des altitudes. Il reste à cette position fixe lors des défilements des échelles de temps et d'altitude. L'orientation du dessin du symbole de l'avion peut tourner autour de cette position, pour que cette orientation représente la pente suivie effectivement par l'avion; la pente est le taux de variation d'altitude par unité de temps; elle peut être calculée par le système de gestion de vol à partir des données fournies par les capteurs. Ainsi, le symbole d'avion représente d'une manière très lisible la pente de montée de l'avion et il est facile au pilote de contrôler que l'inclinaison du symbole correspond à la pente du tracé du segment de plan de vol affiché à un moment donné.

Il peut être préférable que l'échelle des altitudes ne soit pas défilante au cours de la montée de l'avion; dans ce cas, le symbole d'avion affiché reste bien à l'abscisse O (représentant le temps actuel), mais il se déplace sur l'axe des ordonnées au fur et à mesure de la montée ou de la descente de l'avion. Son orientation reste parallèle à la pente de montée actuelle.

Le symbole de l'avion peut être un symbole tel que celui représenté sur la figure 3, représentant une vue schématique horizontale d'avion, ou bien un symbole représentant une vue schématique latérale d'avion.

Le plan de vol vertical ainsi affiché peut comporter d'autres indications, et tout particulièrement des contraintes d'altitude aux waypoints ou des contraintes d'altitude en croisière horizontale. Les contraintes d'altitude aux waypoints pourraient être représentées par des triangles pointe en haut ou pointe en bas telles que ceux de la figure 2.

Dans l'exemple représenté les informations suivantes apparaissent sur l'écran :
- les marges de sécurité d'altitude (REC MAX alt) à ne pas dépasser, et/ou l'altitude de vol optimum (OPT alt) calculée par le système de gestion de vol en fonction de critères prédéfinis, ainsi que la clairance d'altitude (FCU alt) autorisée par le contrôle aérien et réglée par le pilote sur l'interface FCU;
- la valeur du vent aux waypoints, sous forme de symboles qui sont fonction de la force du vent et dont l'orientation est fonction de la direction du vent;
- les altitudes de sécurité pour les diverses phases du vol : sur la figure 3, c'est la courbe en marches d'escalier apparaissant au bas de la figure, qui est décomposée en paliers d'altitude minimale (référencée par rapport à la graduation de l'axe des ordonnées) pour chaque segment du plan de vol vertical; le symbole de l'avion doit toujours être au dessus de cette altitude de sécurité; les altitudes de sécurité sont stockées dans une base de données gérée par le système de gestion de vol.

La clairance d'altitude FCU alt pourrait clignoter et/ou changer de couleur en cas de présence d'un autre avion à moins de 100 pieds (300 m) de différence, ceci dans le cas où un système de détection de présence est prévu ou si des données hertziennes indiquant cette information sont reçues par le système de gestion de vol. Une alarme sonore, et une indication de la valeur exacte de la déviation verticale pourrait être donnée.

De préférence, on peut faire apparaître sur l'axe des abscisses un marqueur temporel servant à définir un repère temporel en vue d'une action à effectuer à l'heure indiquée par ce marqueur. Lorsque l'échelle des temps défilera, le marqueur se rapprochera de l'origine des axes, et une alarme ou indication spécifique (clignotement, signal lumineux sur l'écran ou en dehors de l'écran, avertisseur sonore, etc.) pourra être déclenchée par le système de gestion de vol lorsque le marqueur atteindra l'origine. Plusieurs marqueurs peuvent bien entendu être prévus simultanément à des heures différentes. Dans une réalisation commode, le pilote agit sur une tablette tactile pour déplacer un curseur le long de l'axe des temps et "clique" lorsque le curseur est sur la position temporelle désirée pour créer et afficher le marqueur temporel.

Des touches de fonction sont prévus autour de l'écran de visualisation pour ce type de fonctions spéciales liées à l'affichage temporel du plan de vol vertical. Ainsi, par exemple, la touche de fonction 'TIME MARKER" située à droite de l'écran permet, si elle est enclenchée, d'activer cette fonction de création de marqueur sans modifier l'affichage du plan de vol vertical.

Les autres touches de fonction permettent de réaliser des fonctions supplémentaires telles que la révision de plan de vol, l'affichage de vitesse de l'avion par rapport au sol, etc.

Les touches de fonction à gauche de l'écran sont des touches CSTR ALT, CSTR SPD, CSTR TIME permettant au pilote de rentrer des contraintes d'altitude, de vitesse, et de temps respectivement. La touche STEP permet de planifier une montée ou une descente dans la phase de croisière pour un vol long courrier.

Les touches à droite de l'écran permettent d'accéder aux fonctions suivantes :
- PRED TO ALT : donne le temps de passage à une altitude déterminée;
- PRED SPD : permet l'affichage de prédictions de vitesse sur l'ensemble du plan de vol ou sur un waypoint particulier;
- REPLAN : affiche les 5 aéroports les plus proches et donne la possibilité de calculer des prédictions de temps d'arrivée pour chacun.

Ces touches ne sont données qu'à titre d'exemple; la touche REPLAN pourrait être associée au plan de vol latéral plutôt qu'au plan de vol vertical.

De manière générale, les fonctions de modifications du plan de vol latéral répercuteront (à travers le système de gestion de vol) les changements vers le plan de vol vertical, et réciproquement.

## Revendications

1. Procédé d'aide à la navigation aérienne, utilisant un système de gestion de vol (FMS) qui dialogue avec le pilote par le moyen de plusieurs interfaces parmi lesquelles au moins un écran d'affichage, **caractérisé en ce que** le système de gestion de vol affiche sur l'écran un axe d'abscisse gradué en temps, un axe d'ordonnée gradué en altitude, et, dans ce repère d'axes, un tracé représentant une trajectoire théorique d'aéronef, et **en ce que** ie système de gestion de vol fait défiler l'axe des temps de manière à maintenir à une position fixe sur l'écran une abscisse représentant le temps à l'instant de l'affichage.

2. Procédé selon la revendication 1, **caractérisé en ce que** l'abscisse de position fixe représentant le temps à l'instant de l'affichage est située à l'intersection des axes d'abscisse et d'ordonnée.

3. Procédé selon l'une des revendications 1 ou 2, **caractérisé en ce que** le système de gestion de vol fait défiler l'axe des altitudes de manière à maintenir à une position fixe sur l'écran une ordonnée représentant l'altitude réelle de l'aéronef à l'instant considéré.

4. Procédé selon la revendication 3, **caractérisé en ce que** l'ordonnée de position fixe représentant l'altitude réelle est située à l'intersection des axes d'abscisse et d'ordonnée.

5. Procédé selon l'une des revendications précédentes, **caractérisé en ce que** le tracé de la trajectoire comporte des symboles correspondant à des points caractéristiques, l'abscisse de ces symboles étant l'instant de passage prévu au dessus de ces points.

6. Procédé selon l'une des revendications précédentes, **caractérisé en ce que** le système de gestion de vol affiche un marqueur temporel sur l'échelle défilante des abscisses et **en ce qu'**il active une alarme lorsque le marqueur temporel atteint l'origine des axes.

7. Procédé selon l'une des revendications 1 à 6, **caractérisé en ce que** le système de gestion de vol commande l'élaboration et l'affichage d'un symbole d'avion placé sur l'écran à une position représentant l'heure actuelle et l'altitude actuelle de l'avion.

8. Dispositif d'aide à la navigation aérienne utilisant un système de gestion de vol qui dialogue avec le pilote par le moyen de plusieurs interfaces parmi lesquels au moins un écran d'affichage, **caractérisé en ce qu'**il comprend des moyens pour afficher sur l'écran un axe d'abscisse gradué en temps, un axe d'ordonnée gradué en altitude, et, dans ce repère d'axes, un tracé représentant une trajectoire théorique d'aéronef, des moyens étant prévus pour faire défiler l'axe des temps de manière à maintenir à une position fixe sur l'écran une abscisse représentant le temps à l'instant de l'affichage.

9. Dispositif selon la revendication 8, **caractérisé en ce que** des moyens sont prévus pour faire défiler l'axe des altitudes de manière à maintenir fixe sur l'écran une ordonnée représentant l'altitude réelle de l'aéronef à l'instant de l'affichage.

## Patentansprüche

1. Verfahren zur Unterstützung der Flugnavigation, das ein Flugleitsystem (FMS) verwendet, das mit dem Piloten mittels mehrerer Schnittstellen, unter denen sich wenigstens ein Anzeigeschirm befindet, in Dialog steht, **dadurch gekennzeichnet, daß** das Flugleitsystem auf dem Schirm eine Zeitskalen-Abszissenachse, eine Höhenskalen-Ordinatenachse und in diesem Achsensystem eine Spur, die eine theoretische Bahn des Flugzeugs repräsentiert, anzeigt und daß das Flugleitsystem die Zeitachse in der Weise vorbeilaufen läßt, daß eine Abszisse, die die Zeit im Moment der Anzeige repräsentiert, an einer festen Position auf dem Schirm gehalten wird.

2. Verfahren nach Anspruch 1, **dadurch gekennzeichnet, daß** sich die Abszisse mit fester Position, die die Zeit im Moment der Anzeige repräsentiert, im Schnittpunkt der Abszissenachse und der Ordinatenachse befindet.

3. Verfahren nach einem der Ansprüche 1 oder 2, **dadurch gekennzeichnet, daß** das Flugleitsystem die Höhenachse in der Weise vorbeilaufen läßt, daß eine Ordinate, die die tatsächliche Höhe des Flugzeugs im betrachteten Moment repräsentiert, an einer festen Position auf dem Schirm gehalten wird.

4. Verfahren nach Anspruch 3, **dadurch gekennzeichnet, daß** sich die Ordinate mit fester Position, die die tatsächliche Höhe repräsentiert, im Schnittpunkt der Abszissenachse und der Ordinatenachse befindet.

5. Verfahren nach einem der vorhergehenden Ansprüche, **dadurch gekennzeichnet, daß** die Spur der Bahn Symbole enthält, die charakteristischen Punkten entsprechen, wobei die Abszisse dieser Symbole der Moment der vorgesehenen Bewegung über diese Punkte ist.

6. Verfahren nach einem der vorhergehenden Ansprüche, **dadurch gekennzeichnet, daß** das Flugleitsystem auf der vorbeilaufenden Skala der Abszissen eine Zeitmarkierung anzeigt und daß es einen Alarm auslöst, wenn die Zeitmarkierung den Achsenursprung erreicht.

7. Verfahren nach einem der Ansprüche 1 bis 6, **dadurch gekennzeichnet, daß** das Flugleitsystem die Erstellung und die Anzeige eines Flugzeugsymbols steuert, das auf dem Schirm an einer Position angeordnet wird, die die momentane Zeit und die momentane Höhe des Flugzeugs repräsentiert.

8. Vorrichtung zur Unterstützung der Flugnavigation, die ein Flugleitsystem verwendet, das mit dem Piloten mittels mehrerer Schnittstellen, unter denen sich wenigstens ein Anzeigeschirm befindet, in Dialog steht, **dadurch gekennzeichnet, daß** sie Mittel umfaßt zum Anzeigen einer Zeitskalen-Abszissenachse, einer Höhenskalen-Ordinatenachse und in diesem Achsensystem einer Spur, die eine theoretische Bahn des Flugzeugs repräsentiert, wobei Mittel vorgesehen sind, die die Zeitachse in der Weise vorbeilaufen lassen, daß eine Abszisse, die die Zeit im Moment der Anzeige repräsentiert, an einer festen Position auf dem Schirm gehalten wird.

9. Vorrichtung nach Anspruch 8, **dadurch gekennzeichnet, daß** Mittel vorgesehen sind, die die Höhenachse in der Weise vorbeilaufen lassen, daß eine Ordinate, die die tatsächliche Höhe des Flugzeugs im Moment der Anzeige repräsentiert, auf dem Schirm festgehalten wird.

## Claims

1. Process for aiding aerial navigation, using a flight management system (FMS) which carries out a dialogue with the pilot by means of several interfaces which include at least one display screen, **characterized in that** the flight management system displays on the screen a time-graduated abscissa axis, an altitude-graduated ordinate axis, and, in this system of axes, a plot representing a theoretical path of an aircraft, and **in that** the flight management system scrolls the time axis in such a way as to maintain at a fixed position on the screen an abscissa representing the time at the instant of display.

2. Process according to Claim 1, **characterized in that** the abscissa of fixed position representing the time at the instant of display is situated at the intersection of the abscissa and ordinate axes.

3. Process according to one of Claims 1 or 2, **characterized in that** the flight management system scrolls the altitude axis in such a way as to maintain at a fixed position on the screen an ordinate representing the actual altitude of the aircraft at the relevant instant.

4. Process according to Claim 3, **characterized in that** the ordinate of fixed position representing the actual altitude is situated at the intersection of the abscissa and ordinate axes.

5. Process according to one of the preceding claims, **characterized in that** the plot of the path comprises symbols corresponding to characteristic points, the abscissa of these symbols being the forecast instant of transit above these points.

6. Process according to one of the preceding claims, **characterized in that** the flight management system displays a time marker on the scrolling abscissa scale and **in that** it activates an alarm when the time marker reaches the origin of the axes.

7. Process according to one of Claims 1 to 6, **characterized in that** the flight management system controls the calculation and display of an aircraft symbol placed on the screen at a position representing the current time and the current altitude of the aircraft.

8. Device for aiding aerial navigation using a flight management system which carries out a dialogue with the pilot by means of several interfaces which include at least one display screen, **characterized in that** it comprises means for displaying on the screen a time-graduated abscissa axis, an altitude-graduated ordinate axis, and, in this system of axes, a plot representing a theoretical path of an aircraft, means being provided for scrolling the time axis in such a way as to maintain at a fixed position on the screen an abscissa representing the time at the instant of display.

9. Device according to Claim 8, **characterized in that** means are provided for scrolling the altitude axis in such a way as to maintain fixed on the screen an ordinate representing the actual altitude of the aircraft at the instant of display.
